# EUROPÄISCHE PATENTSCHRIFT

(11) **EP 2 129 446 B1**
(45) Veröffentlichungstag und Bekanntmachung des Hinweises auf die Patenterteilung: **28.09.2016**
(21) Anmeldenummer: 08734432.1
(22) Anmeldetag: 25.03.2008
(51) Int. Cl.: B01D 46/00

(54) **Haltevorrichtung mit Filterschlauch**
Holding device with filter tube
Disposif de retenue avec manche de filtration

(30) Priorität: 26.03.2007 DE 102007014912; 26.03.2007 DE 102007016037
(43) Veröffentlichungstag der Anmeldung: 09.12.2009
(73) Patentinhaber: PERGANDE Gesellschaft für industrielle Entstaubungstechnik mbH, 06369 Weissandt-Gölzau (DE)
(72) Erfinder: PERGANDE, Wilfried, 51109 Köln (DE)
(74) Vertreter: Fischer, Volker
(86) Internationale Anmeldenummer: PCT/DE2008/000502
(87) Internationale Veröffentlichungsnummer: WO 2008/116454

(56) Entgegenhaltungen:
- EP-A- 0 295 213
- DE-C1- 4 334 699
- FR-A- 2 513 539
- US-A- 3 849 092
- US-A- 5 993 519

## Beschreibung

Die Erfindung betrifft eine Haltevorrichtung mit einem Filterschlauch, der austauschbar in einer Gehäusewand einer Filterkammer eines Filters zur Entstaubung eines Gases angeordnet ist und einen Reingasraum von einem Schmutzgassraum trennt. Die Erfindung betrifft insbesondere eine Haltevorrichtung für ein Filterelement mit einem Filterschlauch, wobei der Filterschlauch in der Halterung des Filterelementes gehalten wird.

Die Lösungen des Standes der Technik weisen hierzu gewöhnlich eine Flanschbefestigung auf, bei der das Filterelement über Schraubverbindungen oder mechanische Klemmvorrichtungen gehalten und abgedichtet wird. Derartige Lösungen werden beispielsweise durch die DE 41 34 679 C2 oder die DE 43 24 065 C2 offenbart. Diese Lösungen sind jedoch aufwendig in der Handhabung beim Wechsel eines Filterelementes. Sie erlauben daher kaum eine Automatisierung des Filterelementwechsels.

In der DE 40 321 375 A1 ist eine Lösung zur Halterung eines Filterelementes offenbart, bei der in einer waagerecht angeordneten Lochplatte ein trichterförmiges Segment angeodnet ist, in welches ein sich kegelförmig aufweitendes Filterelement eingehängt wird. Nachteilig bei dieser Lösung ist eine unzureichend zuverlässige Abdichtung der Haltevorrichtung des Filterelementes, so dass unerwünscht Staub oder partikelbeladenes Gas vom Schmutzgasraum in den Reingasraum gelangen kann.

Weitere Lösungen sind beispielsweise aus der FR 2 513 539, der US 5 993 519 und der EP 0 295 213 bekannt.

Es besteht die Aufgabe, eine Haltevorrichtung für ein Filterelement zu entwickeln, die bei geringem Aufwand für den Wechsel eines Filterelementes eine hohe Zuverlässigkeit der Abdichtung des Reingasraumes gegenüber dem Schmutzgasraum eines Filters zur Entstaubung eines Gases gewährleistet. Außerdem soll die Haltevorrichtung die Automatisierung eines Filterelementwechsels begünstigen und zusätzlich einfach und kostengünstig auch für eine Vielzahl von Filterelementen realisierbar sein.

Diese Aufgabe wird durch eine Haltevorrichtung mit einem Filterschlauch gemäß Anspruch 1 gelöst.

Die Gegenfläche des inneren Halteelementes weist eine Ausnehmung auf, in die die aufblasbare Dichtung eingreifen kann. Die Ausnehmung in der Gegenfläche ist eine um das innere Halteelement umlaufende im Querschnitt konkav geformte Nut Eine solche Ausnehmung in der Gegenfläche bewirkt zum einen eine besonders zuverlässige Abdichtung zwischen dem inneren und dem äußeren Halteelement und zum anderen einen sichere Halterung des inneren Halteelementes im äußeren Halteelement im aufgeblasenen Zustand der Dichtung. Bei einer geeigneten Positionierung von Dichtelement und Ausnehmung in der Gegenfläche zueinander kann eine Justierung des inneren Halteelementes innerhalb der Durchgangsöffnung des äußerenHalteelementes beim Aufblasen der Dichtung bewirkt werden. Dadurch kann ein besonders sicherer Sitz des Filterelementes erreicht werden.

Das Wesen der Erfindung besteht in einer äußerst vorteilhaften Anwendung einer pneumatischen druckgesteuerten Abdichtung und Halterung eines Filterelementes mittels einer sich durch Aufblasen vergrößernden Dichtung. Dabei wird sowohl eine sehr zuverlässige Abdichtung der Haltevorrichtung erreicht als auch ein sicherer Sitz des Filterelementes bewirkt. Beides erfordert im Gegensatz zu den Lösungen des Standes der Technik keine aufwändig und mit hoher Präzision zu fertigenden Halteelemente.

Durch die aufblasbare Dichtung wird das Filterelement in einer weitgehend vorbestimmbaren Position sicher gehalten. Fertigungstoleranzen bei der Fertigung der Durchgangsöffnung des äußeren Halteelementes sowie der in die Durchgangsöffnung des äußeren Halteelementes eingreifenden äußeren Umfangsfläche des inneren Halteelementes werden durch die aufblasbare und sich damit an die Gegenfläche des inneren Halteelementes anpassende Dichtung ausgeglichen.

Ein wesentlicher Vorteil der Erfindung besteht zudem darin, dass die gewünschten Zustände des Haltens, Dichtens oder Lösens des inneren Halteelementes in der Durchgangsöffnung des äußeren Halteelementes durch die jeweilige Beaufschlagung der aufblasbaren Dichtung mit Druckluft problemlos automatisierbar sind, wodurch der genannte Vorgang des Filterelementwechselns ebenfalls einfach automatisiert werden kann.

Der Filterschlauch umgreift die äußere Umfangsfläche des inneren Halteelementes. Der Filterschlauch befindet sich somit zwischen dem äußeren und dem inneren Halteelement und wird beim Aufblasen der Dichtung dicht gegen die Gegenfläche des inneren Halteelementes gedrückt. Damit erfolgt beim Aufblasen der Dichtung zusätzlich zur Abdichtung und positionsgenauen Halterung des Filterelementes im äußeren Halteelement auch die dichte Halterung des Filterschlauches am Filterelement.

Bei einer besonders bevorzugten Ausgestaltung der Erfindung ist das äußere Halteelement in eine Filterkopfplatte eingesetzt, in die ein oder mehrere Hohlräume eingebracht sind, über die das zum Aufblasen der Dichtung benötigte Gas geleitet wird. In eine derartige Filterkopfplatte können mehrere äußere Halteelemente eingesetzt sein, die innere Halteelemente mit Filterelementen aufnehmen können. Die Dichtungen der Haltevorrichtungen stehen so mit dem oder den Hohlräumen der Filterkopfplatte in Verbindung, dass eine synchrone Befüllung oder Entleerung der Dichtungen mit Gas erfolgt. Die ist insbesondere für einen automatisierten Wechsel einer Vielzahl von Filterelementen vorteilhaft.

Die Erfindung soll nachfolgend anhand zweier Ausführungsbeispiele weiter beschrieben werden, ohne die Erfindung dadurch einzuschränken.

### Die zugehörigen Zeichnungen zeigen in

- Figur 1:: eine teilweise geschnittene Darstellung einer erfindungsgemäßen Haltevorrichtung für ein Filterelement mit einem Filterschlauch und in
- Figur 2:: zwei in einer Filterkopfplatte angeordnete Haltevorrichtungen.

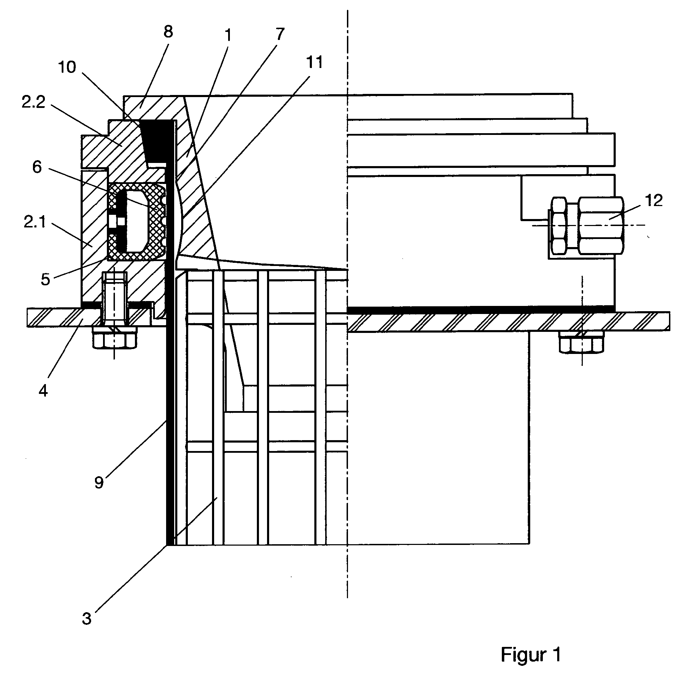

Figur 1 zeigt eine Haltevorrichtung mit einem inneren Halteelement 1 und einem äußeren Halteelement 2. Das äußere Halteelement 2 hat die Gestalt eines Kreisringes mit einer Durchgangsöffnung, in die das innere am oberen Ende eines Filterelementes 3 angeordnete Halteelement 1 eingreift. Das äußere Halteelement 2 ist zweigeteilt ausgeführt und besteht aus einem unteren, in eine Gehäusewand 4 einer Filterkammer eingebauten Teil 2.1 sowie einem in das untere Teil 2.1 eingreifenden oberen Teil 2.2. Das untere Teil 2.1 sowie das obere Teil 2.2 des äußeren Halteelementes 2 sind so gestaltet, dass beim Zusammenfügen beider Teile 2.1 und 2.2 eine die Durchgangsöffnung umspannende eine Aufnahme 5 entsteht. In dieser Aufnahme 5 ist eine aufblasbare Dichtung 6 angeordnet. Am unteren Teil 2.1 des äußeren Halteelement 2.1 ist ein Gasanschluss 12 angeordnet, über den die aufblasbare Dichtung mit druckbeaufschlagtem Gas befüllt bzw. entleert werden kann.
Das innere Halteelement 1 besitzt an seiner Außenseite eine um das innere Halteelement 1 umlaufende, dem äußeren Halteelement 2 zugewandte Gegenfläche 7. Am oberen Ende des inneren Halteelementes 1 befindet sich ein um das innere Halteelement 1 umlaufender Kragen 8, der das innere Halteelement 1 am äußeren Halteelement 2 abstützt und verhindert, dass das innere Halteelement 1 durch die Durchgangsöffnung des äußeren Halteelementes 2 hindurchrutscht. Zwischen der Gegenfläche 7 des inneren Halteelementes 1 und dem äußeren Halteelement 2 befindet sich der das Filterelement 3 umgebende Filterschlauch 9. Dieser weist an seinem oberen Ende ebenfalls einen Kragen 10 auf, der in eine um die Durchgangsöffnung des äußeren Halteelementes 2 umlaufende Ausnehmung eingreift und die Öffnung des Filterschlauches 9 in der Durchgansöffnung des äußeren Halteelementes 2 positioniert.
In die Gegenfläche 7 ist der aufblasbaren Dichtung 6 gegenüberliegend eine um das innere Halteelement 1 umlaufende, konkav geformte Nut 11 eingearbeitet. In diese Nut greift die aufblasbare Dichtung 6 ein, wenn sie mit druckbeaufschlagtem Gas befüllt wird und sich ausdehnt. Sie presst dann den Filterschlauch 9 fest gegen die Gegenfläche 7 des inneren Halteelementes 1. Das innere und das äußere Halteelement 1 und 2 sind dann dicht miteinander verbunden. Durch das Eingreifen der mit druckbeaufschlagtem Gas aufgeblasenen Dichtung 6 in die Nut 11 sind beide Halteelemente 1 und 2 auch sicher zueinander positioniert.
Wird der Gasdruck des die aufblasbare Dichtung 6 aufblasenden Gases abgesenkt, zieht sich die aufblasbare Dichtung 6 in die Ausnehmung 5 im äußeren Halteelement 2 zurück. Das innere Halteelement 1 kann samt dem Filterelement 3 und dem Filterschlauch 9 leicht aus dem äußeren Halteelement 2 entnommen und gegen ein anderes inneres Halteelement 1 samt anderem Filterelement 3 und Filterschlauch 9 ersetzt werden.

Abweichend von der in Figur 1 dargestellten zweigeteilten Ausführung des äußeren Halteelementes kann dieses auch einteilig als Ring mit umlaufender Nut ausgeführt sein.

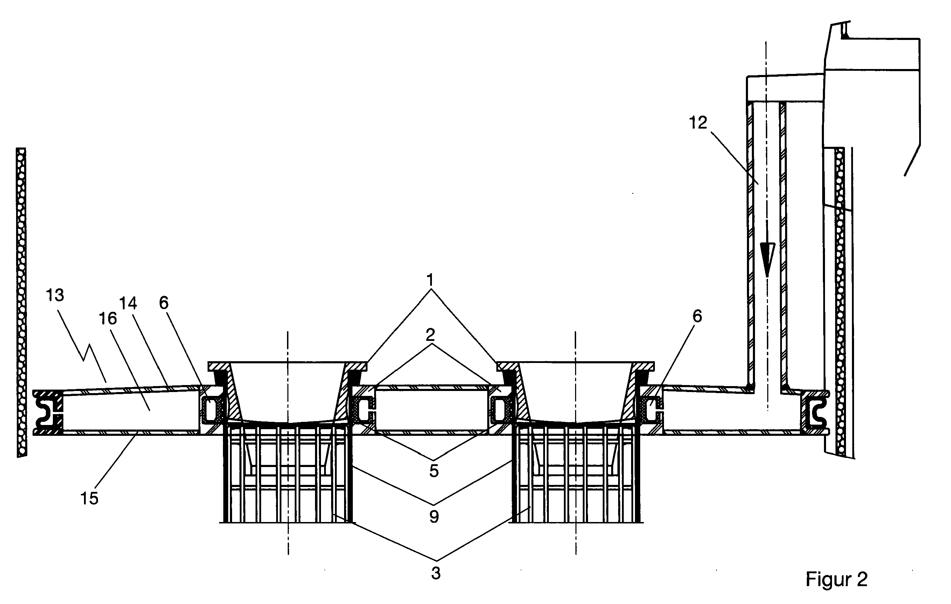

Figur 2 zeigt zwei in einer Filterkopfplatte 13 angeordnete Haltevorrichtungen, wobei die Anzahl der in einer Filterkopfplatte 13 angeordneten Haltevorrichtungen beliebig erweiterbar ist. Die Filterkopfplatte 13 bildet bei dieser Ausführung die obere Gehäusewand 4 einer Filterkammer. Sie besteht aus einer oberen Platte 14 und einer unteren Platte 15, zwischen denen sich ein Hohlraum 16 befindet. Die äußeren Halteelemente 2 sind als Kreisringe ausgeführt, die eine umlaufende Ausnehmung 4 aufweisen. Sie sind in die Filterkopfplatte 13 eingesetzt. In der umlaufenden Ausnehmung 4 jedes äußeren Halteelementes 2 befindet sich ein aufblasbares Dichtelement 6. In jedes äußeres Halteelement 2 ist ein inneres Halteelement 1 mit Filterelement 3 und Schlauchfilter 9 eingesetzt.
Jedes auflasbare Dichtelement 6 steht mit dem Hohlraum 16 der Filterkopfplatte 13 so in Wirkverbindung, dass in den Hohlraum 16 eingegebenes druckbeaufschlagtes Gas in die auflasbaren Dichtelemente 6 geleitet wird und diese aufbläst, wodurch, wie zu Figur 1 beschrieben, eine dichte Halterung und Positionierung der inneren Halteelemente 1 samt Filterelement 3 und Filterschlauch 9 in den äußeren Halteelementen 2 erfolgt.
Die aufblasbaren Dichtungen 6 aller in der Filterkopfplatte 13 angeordneten Haltevorrichtungen können synchron mit druckbeaufschlagtem Gas befüllt bzw. entleert und so die inneren Halteelemente 1 samt Filterelement 3 und Filterschlauch 9 abgedichtet und fest in Position gehalten bzw. für eine Entnahme gelockert und freigegeben werden. Dies ist eine wichtige Voraussetzung für eine Automatisierung eines Filterelementwechsels.

### Liste der verwendeten Bezugszeichen

- 1: inneres Halteelement
- 2: äußeres Halteelement
- 2.1: unteres Teil des äußeren Halteelementes
- 2.2: oberes Teil des äußeren Halteelementes
- 3: Filterelement
- 4: Gehäusewand einer Filterkammer
- 5: Ausnehmung
- 6: aufblasbare Dichtung
- 7: Gegenfläche des inneren Halteelementes 1
- 8: Kragen des inneren Halteelementes 1
- 9: Filterschlauch
- 10: Kragen des Filterschlauches 9
- 11: Nut in der Gegenfläche 7
- 12: Gasanschluss
- 13: Filterkopfplatte
- 14: obere Platte der Filterkopfplatte 13
- 15: untere Platte der Filterkopfplatte 13
- 16: Hohlraum in der Filterkopfplatte 13

## Patentansprüche

1. Haltevorrichtung mit einem Filterschlauch (9), bestehend aus einem in einer Gehäusewand (4, 13) einer Filterkammer angeordneten äußeren Halteelement (2) und einem inneren, am offenen Ende des Filterschlauchs (9) angeordneten Halteelements (1), wobei das äußere Halteelement (2) eine Durchgangsöffnung zur Aufnahme des inneren Halteelements (1) aufweist , wobei am äußeren Halteelement (2) die Durchgangsfläche umgebend eine aufblasbare Dichtung (6) angeordnet ist und das innere Halteelement (1) an seinem äußeren Umfang eine Gegenfläche (7) aufweist, an der die aufblasbare Dichtung (6) unter Verwendung von mit dem äußeren Halteelement (2) verbundenen Mitteln (12) zur Einleitung eines Gases durch Aufblasen dichtend zur Anlage gebracht werden kann,
**dadurch gekennzeichnet, dass**
die Gegenfläche des inneren Halteelementes (1) eine um das innere Halteelement umlaufende und dem äußeren Halteelement (2) zugewandte Ausnehmung in Gestalt einer im Querschnitt konkaven Nut aufweist, in welche die Dichtung (6) eingreift, wobei der sich zwischen dem inneren Halteelement (1) und dem äußeren Halteelement (2) befindende Filterschlauch (9) beim Aufblasen der Dichtung (6) dicht gegen die äußere Gegenfläche des inneren Halteelementes (1) gedrückt wird, der Filterschlauch (9) einen Kragen (10) aufweist, der in eine um die Durchgangsöffnung des äußeren Halteelementes (2) umlaufende Ausnehmung eingreift und die Öffnung des Filterschlauches (9) in der Durchgangsöffnung des äußeren Halteelementes (2) positioniert.

2. Haltevorrichtung nach Anspruch 1,
**dadurch gekennzeichnet, dass**
sich am oberen Ende des inneren Halteelementes (1) ein um das innere Halteelement (1) umlaufender Kragen (8) befindet, der das innere Halteelement (1) am äußeren Halteelement (2) abstützt und verhindert, dass das innere Halteelement (1) durch die Durchgangsöffnung des äußeren Halteelementes (2) hindurchrutscht.

3. Haltevorrichtung nach Anspruch 1 oder 2,
**dadurch gekennzeichnet, dass**
die Einleitung des Gases in die aufblasbare Dichtung (6) durch in einer das äußere Halteelement (2) tragenden Filterkopfplatte (13) angeordnete Hohlräume (16) erfolgt.

## Claims

1. Retaining apparatus with a filter hose (9), comprising an outer retaining element (2), which is arranged in a housing wall (4, 13) of a filter chamber, and an inner retaining element (1), which is arranged at the open end of the filter hose (9), wherein the outer retaining element (2) has a through-passage opening for accommodating the inner retaining element (1), wherein an inflatable seal (6) is arranged on the outer retaining element (2), so as to enclose the through-passage surface area, and the inner retaining element (1) has, on its outer circumference, a mating surface (7), against which the inflatable seal (6) can be brought into sealing abutment by being inflated, use being made in the process of means (12) which are connected to the outer retaining element (2) and are intended for introducing a gas,
**characterized in that**
the mating surface of the inner retaining element (1) has a recess which encircles the inner retaining element, is directed towards the outer retaining element (2), is in the form of a cross-sectionally concave groove and in which the seal (6) engages, wherein, when the seal (6) is being inflated, the filter hose (9), which is located between the inner retaining element (1) and the outer retaining element (2), is pushed with sealing action against the outer mating surface of the inner retaining element (1), and the filter hose (9) has a collar (10) which engages in a recess encircling the through-passage opening of the outer retaining element (2) and positions the opening of the filter hose (9) in the through-passage opening of the outer retaining element (2).

2. Retaining apparatus according to Claim 1,
**characterized in that**
located at the upper end of the inner retaining element (1) is a collar (8) which encircles the inner retaining element (1), supports the inner retaining element (1) on the outer retaining element (2) and prevents the inner retaining element (1) from slipping through the through-passage opening of the outer retaining element (2).

3. Retaining apparatus according to Claim 1 or 2,
**characterized in that**
the gas is introduced into the inflatable seal (6) through cavities (16) arranged in a filter head plate (13), which bears the outer retaining element (2).

## Revendications

1. Dispositif de retenue avec une manche filtrante (9), composé d'un élément de retenue extérieur (2) disposé dans une paroi de boîtier (4, 13) d'une chambre de filtration et d'un élément de retenue intérieur (1) disposé à l'extrémité ouverte de la manche filtrante (9), l'élément de retenue extérieur (2) présentant une ouverture de passage pour la réception de l'élément de retenue intérieur (1), un joint gonflable (6) étant disposé sur l'élément de retenue extérieur (2) de manière à entourer la surface de passage et l'élément de retenue intérieur (1) présentant à sa périphérie extérieure une surface opposée (7) contre laquelle le joint gonflable (6) peut être appliqué de façon étanche par gonflage en utilisant des moyens (12) d'introduction d'un gaz reliés à l'élément de retenue extérieur (2),
**caractérisé en ce que**
la surface opposée de l'élément de retenue intérieur (1) présente un évidement faisant le tour de l'élément de retenue intérieur et tourné vers l'élément de retenue extérieur (2) sous la forme d'une rainure concave en section transversale, dans lequel le joint (6) s'engage, la manche filtrante (9) se trouvant entre l'élément de retenue intérieur (1) et l'élément de retenue extérieur (2) étant pressée de façon étanche contre la surface opposée extérieure de l'élément de retenue intérieur (1) lors du gonflage du joint (6), la manche filtrante (9) présentant un collet (10) qui s'engage dans un évidement qui fait le tour de l'ouverture de passage de l'élément de retenue extérieur (2) et positionne l'ouverture de la manche filtrante (9) dans l'ouverture de passage de l'élément de retenue extérieur (2).

2. Dispositif de retenue selon la revendication 1,
**caractérisé en ce que**
un collet (8) faisant le tour de l'élément de retenue intérieur (1) se trouve à l'extrémité supérieure de l'élément de retenue intérieur (1), qui forme un appui pour l'élément de retenue intérieur (1) sur l'élément de retenue extérieur (2) et empêche ainsi l'élément de retenue intérieur (1) de glisser à travers l'ouverture de passage de l'élément de retenue extérieur (2).

3. Dispositif de retenue selon la revendication 1 ou 2,
**caractérisé en ce que**
l'introduction du gaz dans le joint gonflable (6) s'effectue à travers des cavités (16) disposées dans une plaque de tête de filtre (13) portant l'élément de retenue extérieur (2).
